(19) Europäisches Patentamt
European Patent Office
Office européen des brevets

(11) Veröffentlichungsnummer: **0 167 913**
**B1**

(12) **EUROPÄISCHE PATENTSCHRIFT**

(45) Veröffentlichungstag der Patentschrift: **14.03.90**

(51) Int. Cl.$^5$: **C 09 B 29/042**, C 09 B 67/48, D 06 P 1/18

(21) Anmeldenummer: **85107792.5**

(22) Anmeldetag: **24.06.85**

(54) **Azofarbstoffe.**

(30) Priorität: **07.07.84 DE 3425127**

(43) Veröffentlichungstag der Anmeldung:
**15.01.86 Patentblatt 86/03**

(45) Bekanntmachung des Hinweises auf die Patenterteilung:
**14.03.90 Patentblatt 90/11**

(84) Benannte Vertragsstaaten:
**CH DE FR GB IT LI**

(56) Entgegenhaltungen:
**EP-A-0 093 926**
**DE-A-2 849 471**

**Die Akte enthält technische Angaben, die nach dem Eingang der Anmeldung eingereicht wurden und die nicht in dieser Patentschrift enthalten sind.**

(73) Patentinhaber: **BAYER AG**
**D-5090 Leverkusen 1 Bayerwerk (DE)**

(72) Erfinder: **Kruckenberg, Winfried, Dr.**
**Berta-von-Suttner-Strasse 59**
**D-5090 Leverkusen 1 (DE)**
Erfinder: **Leverenz, Klaus, Dr.**
**Heymannstrasse 44**
**D-5090 Leverkusen 1 (DE)**
Erfinder: **Otten, Hans-Günter, Dr.**
**Kurt-Schumacher-Ring 91a**
**D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 167 913 B1

**Beschreibung**

Gegenstand der Erfindung sind Dispersionsfarbstoffe der Formel

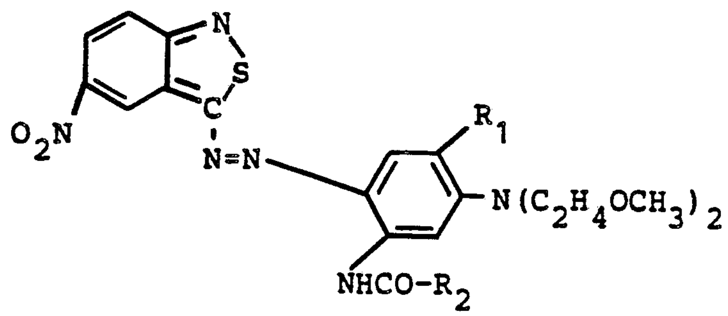

(I)

worin
$R_1$ Wasserstoff, $C_1$—$C_4$-Alkoxy oder $C_1$—$C_4$-Alkoxyethoxy und
$R_2$ Wasserstoff, $C_1$—$C_5$-Alkyl, $C_1$—$C_5$-Alkoxy, $NH_2$, NH-$C_1$—$C_5$-Alkyl, gegebenenfalls durch $CH_3$, Cl, $OCH_3$ oder $OC_2H_5$ substituiertes Phenyl, Furyl-2-, Thienyl-2- oder Pyridyl-2(3,4)- bedeuten.

Bevorzugte Farbstoffe sind solche der Formel I, worin
$R_1$ Wasserstoff oder $C_1$—$C_2$-Alkoxy und
$R_2$ $C_1$—$C_4$-Alkyl, insbesondere $C_1$—$C_2$-Alkyl bedeuten.

Man erhält diese Farbstoffe in üblicher Weise durch Diazotierung und Kupplung entsprechender Ausgangsmaterialien.

Die neuen Farbstoffe zeigen ein gutes Egalisiervermögen, sowie eine hohe Beständigkeit gegen Säuren, Alkali und Redoxsysteme und eignen sich daher hervorragend zum Färben von synthetischen Fasermaterialien, insbesondere Polyester- und Cellulosetriacetatfasern, die in einem klaren, neutralen oder grünstichig blauen Farbton gefärbt werden.

Die erhaltenen Färbungen zeichnen sich durch gute Allgemeinechtheiten und das Fehlen des "catalytic fading" — Effektes aus. Hervorzuheben sind weiterhin die sehr guten Naßechtheiten der Färbungen auf Polyester/Baumwoll-Artikeln.

Im Vergleich zu ähnlichen Farbstoffen gemäß DE—A 15 44 375 (= US—A 34 55 898) bestehen deutliche Vorteile im Ziehvermögen und in den Naßechtheiten.

Gegenüber den konstitutionell nächstvergleichbaren Farbstoffen aus DE—A 28 49 471 (= US—A 4 465 628) zeigen die erfindungsgemäßen Farbstoffe ein besseres Carrier-Aufbauvermögen und eine geringere Temperaturabhängigkeit des Ziehvermögens.

Aus EP—A 0 093 926 sind schließlich ebenfalls 5-Nitrobenzisothiazol-Azofarbstoffe bekannt, die sich jedoch von den erfindungsgemäßen Verbindungen durch eine —$NHSO_2$-Gruppe — anstelle der —NHCO-Gruppe — unterscheiden.

Besonders bemerkenswert ist, daß die neuen Azofarbstoffe in der Klarheit ihrer Färbungen den anwendungstechnisch ähnlichen, aber wesentlich teueren Anthrachinonfarbstoffen, etwa vom Typ Disperse Blue 56 und 73, recht nahekommen.

Beispiel 1

149 g 3-Amino-5-nitro-benzisothiazol-(2,1) werden bei 5 bis 8°C unter Rühren in eine Mischung aus 350 ml Schwefelsäure, 96%ig und 125 ml Orthophosphorsäure, 85%ig, in ca. 30 Minuten eingetragen und weitere 30 Minuten verrührt. Bei 3 bis 5°C werden 132 ml Nitrosylschwefelsäure zugetropft. Man rührt insgesamt 3 Stunden bei 3°C nach.

Dann läßt man die dabei erhaltene Lösung des Diazoniumsalzes zu einer Lösung von 288,5 g 3-[Bis(2-methoxyethyl)-amino]-acetanilid, 7,5 g Amidosulfonsäure und 5 g Emulgator in einer Mischung aus 2 l Wasser, 4 kg Eis und 168 ml Schwefelsäure (48%ig) in ca. 30 Minuten einlaufen. Die Kupplung ist nach 1 Stunde beendet.

Danach wird der Farbtoff abgesaugt und mit Wasser gewaschen. Er färbt Polyesterfasern in einem grünstichig blauen Farbton mit guten Allgemeinechtheiten. Eine Lösung des getrockneten Farbstoffs in Dimethylformamid ist gekennzeichnet durch λ max: 620 nm.

Zur Herstellung einer färbestabilen Modifikation wird der feuchte Farbstoffpreßkuchen in 6 l Wasser angerührt und mit ca. 500 ml Natronlauge (40 g NaOH/100 ml) neutralisiert (pH 7,5—8). Mittels direktem Dampf wird in einer Stunde auf 60°C aufgeheizt und 4 Stunden bei 60—70°C getempert.

Nach Abkühlen auf 50°C wird der Fabstoff erneut abgesaugt, mit Wasser gewaschen und getrocknet. Man erhält 315 g Farbstoff, der durch die Netzebenenabstände d/Å 3,39, 3,49 und 4,18 mit den relativen Intensitäten 100, 80 bzw. 80 charakterisiert ist.

Beispiel 2

Man verfährt wie in Beispiel 1 angegeben, ersetzt jedoch die Kupplungskomponente durch die äquivalente Menge der Verbindung der Formel

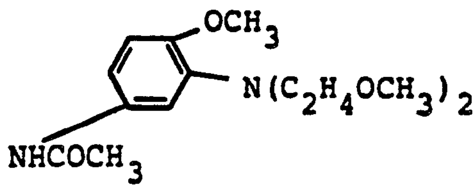

und stellt den pH-Wert während der Kupplung mit verdünntem NaOH auf ca. 2 ein.

Man erhält ebenfalls einen wertvollen Farbstoff, der auf Polyesterfasern einen blaugrünen Farbton erzeugt.

η max (DMF): 654 nm.

**Patentansprüche**

1. Azofarbstoffe der Formel

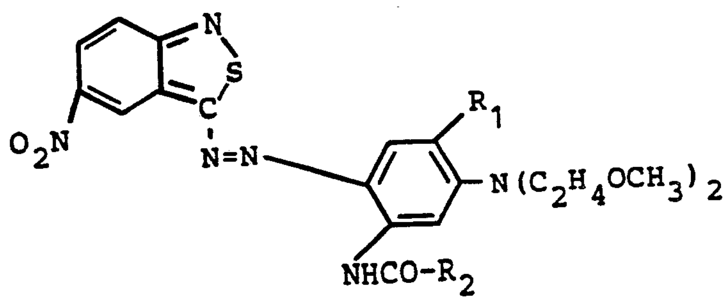

(I)

worin

$R_1$ Wasserstoff, $C_1$—$C_4$-Alkoxy oder $C_1$—$C_4$-Alkoxyethoxy und

$R_2$ Wasserstoff, $C_1$—$C_5$-Alkyl, $C_1$—$C_5$-Alkoxy, $NH_2$, NH-$C_1$—$C_5$-Alkyl, gegebenenfalls durch $CH_3$, Cl, $OCH_3$ oder $OC_2H_5$ substituiertes Phenyl, Furyl-2-, Thienyl-2- oder Pyridyl-2(3,4)- bedeuten.

2. Azofarbstoffe gemäß Anspruch 1, dadurch gekennzeichnet, daß

$R_1$ Wasserstoff oder $C_1$—$C_2$-Alkoxy und

$R_2$ $C_1$—$C_4$-Alkyl bedeuten.

3. Azofarbstoff gemäß Anspruch 1, dadurch gekennzeichnet, daß

$R_1$ Wasserstoff und

$R_2$ Methyl bedeuten.

4. Färbstabile Modifikation des Farbstoffs gemäß Anspruch 3, gekennzeichnet durch die Netzebenenabstände d/Å 3,39, 3,49 und 4,18 mit den relativen Intensitäten 100, 80 bzw. 80.

5. Verfahren zum Färben von synthetischem Fasermaterial, dadurch gekennzeichnet, daß man Farbstoffe gemäß Anspruch 1 verwendet.

**Revendications**

1. Colorants azoïques de formule:

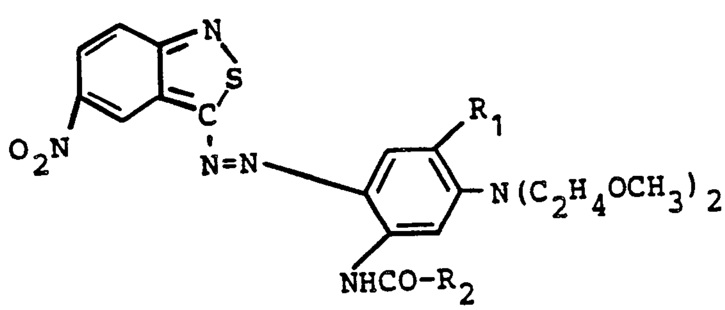

(I)

dans laquelle

$R_1$ représente un atome d'hydrogéne, un groupe alcoxy en $C_1$ à $C_4$ ou un groupe alcoxy (en $C_1$ à $C_4$)-éthoxy, et

$R_2$ représente un atome d'hydrogène, un groupe alkyle en $C_1$ à $C_5$, alcoxy en $C_1$ à $C_5$, $NH_2$, NH-alkyle (en $C_1$ à $C_5$), un groupe phényle (éventuellement substitué par $CH_3$, Cl, $OCH_3$ ou $OC_2H_5$), un groupe furyle-2, thiényle-2 ou pyridyle-2(3,4).

2. Colorants azoïques selon la revendication 1, caractérisés en ce que
$R_1$ représente un atome d'hydrogène ou un groupe alkyle en $C_1$ ou $C_2$, et
$R_2$ représente un groupe alkyle en $C_1$ à $C_4$.

3. Colorant azoïque selon la revendication 1, caractérisé en ce que
$R_1$ représente un atome d'hydrogène et
$R_2$ représente un groupe méthyle.

4. Variante, de couleur stable, du colorant selon la revendication 3, caractérisée par les distances d de plans réticulaires de 3,39; 3,49 et 4,18 angströms, ayant les intensités relatives de 100, 80 ou 80.

5. Procédé pour teindre de la matière en fibre synthétique, caractérisé en ce qu'on utilise des colorants selon la revendication 1.

## Claims

1. Azo dyestuffs of the formula

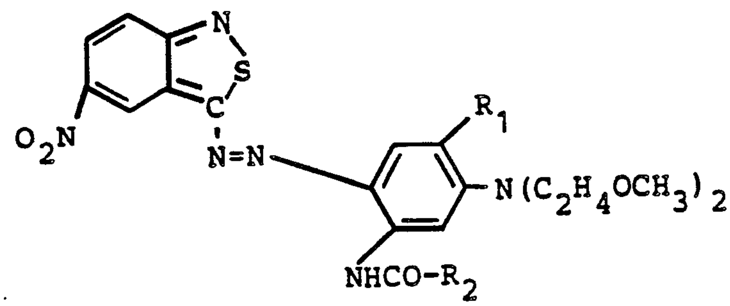

(I)

wherein
$R_1$ denotes hydrogen, $C_1$—$C_4$-alkoxy or $C_1$—$C_4$-alkoxyethoxy and
$R_2$ denotes hydrogen, $C_1$—$C_5$-alkyl, $C_1$—$C_5$-alkoxy, $NH_2$, NH-$C_1$—$C_5$-alkyl, optionally $CH_3$-, Cl-, $OCH_3$- or $OC_2H_5$-substituted phenyl, fur-2-yl, thien-2-yl or 3,4-pyrid-2-yl.

2. Azo dyestuffs according to Claim 1, characterised in that
$R_1$ denotes hydrogen or $C_1$—$C_2$-alkoxy and
$R_2$ denotes $C_1$—$C_4$-alkyl.

3. Azo dyestuff according to Claim 1, characterised in that
$R_1$ denotes hydrogen and
$R_2$ denotes methyl.

4. Modification of the dyestuff according to Claim 3 which is stable to dyeing, characterised by the lattice plane spacings d/Å 3.39, 3.49 and 4.18 having the relative intensities 100, 80 and 80 respectively.

5. Process for dyeing synthetic fibre material, characterised in that dyestuffs according to Claim 1 are used.